# EUROPEAN PATENT SPECIFICATION

(11) **EP 2 361 505 B1**
(45) Date of publication and mention of the grant of the patent: **02.10.2019**
(21) Application number: 11150541.8
(22) Date of filing: 11.01.2011
(51) Int. Cl.: A21C 13/02, A21C 9/08

(54) **Device for temporarily accomodating product holders and assembly for dough processing comprising such a device**
Vorrichtung zur vorübergehenden Aufnahme von Produkthaltern und Anordnung zur Teigverarbeitung mit einer derartigen Vorrichtung
Dispositif pour accueillir temporairement des supports de produits et ensemble pour le traitement de pâte comprenant ledit dispositif

(30) Priority: 18.02.2010 NL 2004264
(43) Date of publication of application: 31.08.2011
(73) Proprietor: Kaak Groep B.V., 7061 GA Terborg (NL)
(72) Inventor: Nijkamp, Gerrit Jan Herman, 7121 BS Aalten (NL)
(74) Representative: Peters, Sebastian Martinus

(56) References cited:
- EP-A1- 0 216 409
- EP-A1- 0 766 920
- WO-A1-2007/086741
- GB-A- 2 257 890
- US-A- 1 794 331
- US-A- 3 184 032

## Description

### BACKGROUND OF THE INVENTION

The invention relates to a device for temporarily accommodating product holders or product trays, in particular product holders for supporting dough products, which device is provided with at least two adjacently positioned lift compartments, wherein the one lift compartment serves for intermittent upward conveyance of the product holders and the other lift compartment serves for intermittent downward conveyance of the product holders, and with a transfer device for at the upper side of the lift compartments transferring the product holders from the one to the other lift compartment.

Such a device is known from Dutch patent NL1001342C. In this document a proving cabinet having two adjacently positioned lift compartments is described as an example, although such a device can also be used in among others refrigerators, buffer cabinets, pasteurization cabinets, freezers and ovens. In one side wall of the proving cabinet, near the lower side of a first lift compartment, an inlet opening is placed for introducing product holders for supporting dough products, also referred to by the term dough holders. At the bottom of the first lift compartment of the proving cabinet an inlet conveyor is placed for introducing the dough holders into the first lift compartment, which dough holders can subsequently be moved upwards by means of supporting elements attached to supporting chains. At the top of the proving cabinet a transfer device is present which transfers the dough holders from the first lift compartment to a second lift compartment. In the second lift compartment dough holders are moved downwards by means of supporting elements attached to supporting chains, onto an outlet conveyor that is placed at the bottom of the second lift compartment. The outlet conveyor discharges the dough holders out of the proving cabinet via an outlet opening placed in a side wall of the proving cabinet near the lower side of the second lift compartment.

In everyday practice such devices for temporarily accommodating product holders, are used to subject the product holders and/or dough products placed thereon to a processing step during a wanted and set period of time. In that case the product holders are in the first lift compartment during approximately half said period of time, and during approximately the other half of said period of time they are in the second lift compartment, such that after going through both the first and second lift compartment the wanted period of time has passed by. A deviation from the wanted period of time usually has a negative effect on the production process and/or the quality of the product, particularly in dough products.

### SUMMARY OF THE INVENTION

The invention is defined by a device according to claim 1, an assembly according to claim 5 and a method according to claim 13.

It is among others an object of the present invention to provide a device for temporarily accommodating product holders or product trays, such as for instance dough holders or dough trays, with which a more flexible production process can be achieved.

The inventor realised that under certain conditions and/or during certain parts of the production process, the wanted period of time that the product holders need to go through the first and second lift compartment can be deviated from. For example at instances in the production process where there are no products present on the product holders, the wanted period of time can sometimes be deviated from. Or at moments in the production process when there are no or a number of testing products present on the product holders, for instance during starting up the production process for manufacturing a specific dough product, for instance a specific type of bread, or during switching the production process from a first type of dough product to a second type of dough product, the wanted period of time can be deviated from. Particularly when the wanted passage time through the first and second lift compartment can be deviated from, use can be made of a second outlet and inlet opening for in between times discharging or introducing product holders from or into the device for temporarily accommodating product holders. As a result a more flexible device for temporarily accommodating product holders can be provided wherein the product holders for instance are introduced at a first level, for instance at the lower side, and are discharged at another second level, for instance at the upper side.

According to the invention the first lift compartment has a first inlet opening at the lower side and the second lift compartment has a first outlet opening at the lower side, and the first lift compartment has a second outlet opening at the upper side and the second lift compartment has a second inlet opening at the upper side. In that case the product holders are introduced via the first inlet opening at the lower side of the first lift compartment and are intermittently conveyed upwards within the first lift compartment. Usually at the top of the first lift compartment the product holders are transferred to the second lift compartment for at that location being intermittently conveyed downwards. However, at the top of the first lift compartment the product holders can both be transferred to the second compartment or be discharged via the second outlet opening. If the product holders are discharged via the second outlet opening, new or different product holders can be introduced into the second lift compartment via the second inlet opening in order to take the place of the discharged product holders in the process.

According to the invention the transfer device is adapted for at the upper side introducing product holders via the inlet opening at the upper side and for at the upper side discharging product holders via the outlet opening at the upper side. By using the transfer device for at the upper side introducing or discharging product holders no extra provisions are necessary for that purpose.

In one embodiment the transfer device for transferring the product holders from the first to the second lift compartment is driven in a first drive direction, and the transfer device for at the upper side introducing and/or discharging product holders is driven in a second drive direction that is oriented opposite with respect to the first drive direction. Usually the transfer device is used in one direction only; namely for transferring the product holders from the first lift compartment to the second lift compartment. By making it possible to drive the transfer device in two directions it is possible to discharge the product holders at a side of the transfer device that faces away from the second lift compartment. It is furthermore possible to introduce product holders at a side of the transfer device that faces away from the first lift compartment.

In one embodiment each lift compartment is provided with pairs of elongated supporting elements that are placed above one another, wherein the supporting elements of each pair are situated opposite each other for supporting a product holder.

In one embodiment each lift compartment on both sides comprises a set of endless supporting chains that move parallel to each other, to which supporting chains the supporting elements are attached, wherein the supporting chains, at a side that faces the inside of the lift compartment, convey the supporting elements in the first lift compartment intermittently upwards and the supporting elements in the second lift compartment intermittently downwards, respectively.

According to a second aspect the invention provides an assembly according to claim 5.

In one embodiment the assembly furthermore comprises a first supply conveyor for supplying product holders to the inlet opening situated at the lower side of the device for temporarily accommodating product holders, a first discharge conveyor for discharging product holders to the outlet opening situated at the lower side of the device for temporarily accommodating product holders, a second supply conveyor for supplying product holders to the inlet opening situated at the upper side of the device for temporarily accommodating product holders, and a second discharge conveyor for discharging product holders to the outlet opening situated at the upper side of the device for temporarily accommodating product holders.

In one embodiment the second discharge conveyor is adapted for conveying product holders from the device for temporarily accommodating product holders to a storage device for product holders, and the second supply conveyor is adapted for conveying product holders from the storage device to the device for temporarily accommodating product holders.

In one embodiment the storage device comprises a platform, wherein the platform is placed above or on top of a device for dough processing. In one embodiment the device for dough processing comprises an oven. In that way use can be made of the space above a device for dough processing, such as an oven, for at that location placing a storage device for product holders. In that way no extra floor space for a storage device will be required. In one embodiment the device for temporarily accommodating product holders and the device for dough processing both are part of a same production line for dough products.

In one embodiment the platform is provided with a portal robot. In that way product holders can be placed in storage or retrieved from storage by the robot in an automated way, for instance when switching from first product holders for a first product to second product holders for a second product.

In one embodiment the second discharge conveyor is adapted for conveying product holders from the device for temporarily accommodating product holders to a further device for dough processing, and the second supply conveyor is adapted for conveying product holders from the further device for dough processing to the device for temporarily accommodating product holders. In one embodiment the further device for dough processing comprises a device for providing the dough products with a decoration. In that way the possibility is created for substantially halfway the wanted passage time discharging the product holders from the device for temporarily accommodating product holders to an extra dough processing, for instance a decoration device, and after that re-introducing the decorated products into the device for temporarily accommodating product holders in order to go trough the remainder of the wanted passage time.

In one embodiment the second discharge conveyor outside of the device for temporarily accommodating product holders, is placed contiguously to the second supply conveyor.

In one embodiment the second discharge conveyor outside of the device for temporarily accommodating product holders forms one unity with the second supply conveyor. Thus the second discharge and supply conveyor form a loop outside of the device for temporarily accommodating product holders. If such a loop is provided with a decoration device, it will below also be referred to as decoration loop.

According to a third aspect the invention provides a method according to claim 13.

### SHORT DESCRIPTION OF THE DRAWINGS

The invention will be elucidated on the basis of a number of exemplary embodiments shown in the attached drawings, in which:
figure 1 shows a schematic view in perspective of a U-shaped proving cabinet for allowing pieces of dough on the dough holders to prove;
figure 2 shows a schematic view in perspective of a U-shaped freezer for freezing dough products on the dough holders;
figure 3 shows a schematic view in perspective of an in-line cooling device for cooling dough holders;
figure 4 shows a detail view of an upper inlet for a device according to figure 3;
figure 5A shows a schematic view of the course of the dough holders through a device according to figure 3;
figure 5B shows a schematic view of the course of the dough holders through an alternative device, which is not part of the invention; and
figure 6 shows a schematic top view of a part of an assembly for dough processing that is a part of a production line for dough products.

### DETAILED DESCRIPTION OF THE DRAWINGS

The invention will be further elucidated below on the basis of a number of exemplary embodiments.

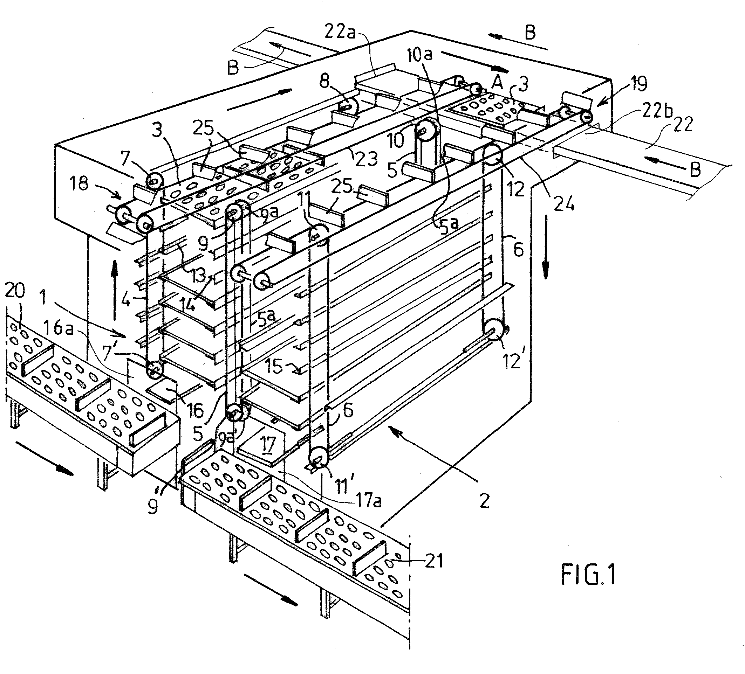

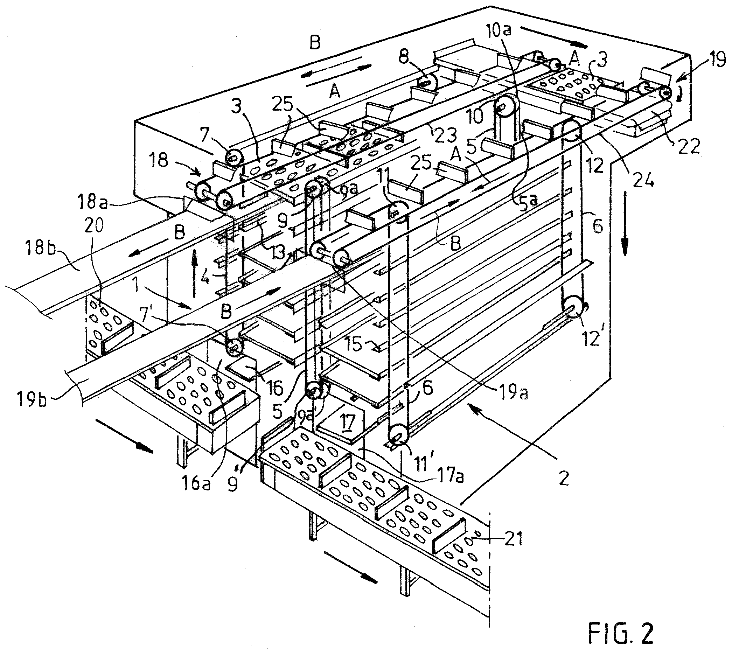

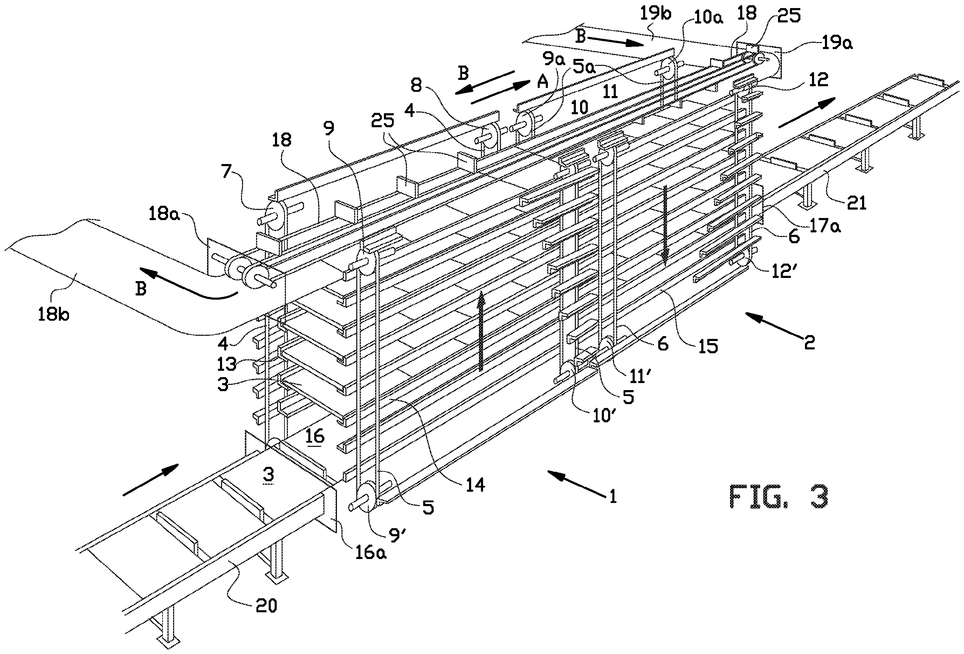

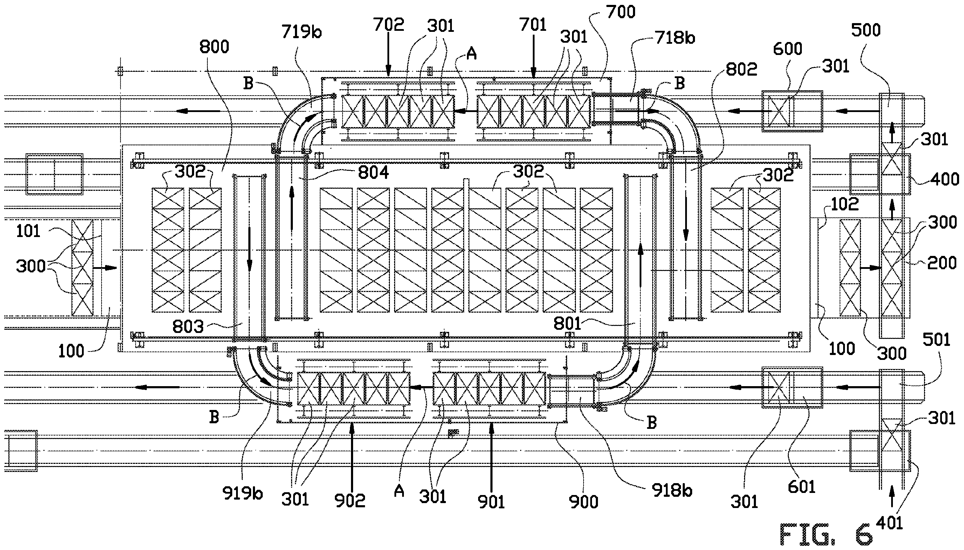

Please note that the invention relates to a device that is provided with at least two adjacently positioned lift compartments. Said lift compartments may for instance be placed laterally next to each other, as shown in the examples in figures 1 and 2, or be placed in each other's extension behind one another as shown in the examples in figures 3 and 6.

The proving cabinet shown in figure 1 comprises two cabinet departments or lift compartments 1, 2, situated parallel to each other and in which dough holders 3, in this case baking pans, are intermittently moved upwards and downwards, respectively, according to the indicated arrows. The first lift compartment 1 on both sides comprises a set of endless supporting chains 4, that are guided around sprocket wheels 7, 7' and 8 and a set of endless supporting chains 5 that are guided around sprocket wheels 9, 9' and 10. Likewise the second lift compartment 2 on both sides comprises a set of endless supporting chains 6 that are guided around sprocket wheels 11, 11' and 12 and a set of endless supporting chains 5. The sets of supporting chains 4, 5 and 6 carry the supporting elements 13, 14, 15 for the dough holders 3.

At the bottom in each lift compartment 1, 2 an inlet conveyor 16 or an outlet conveyor 17, respectively, is situated, whereas at the top of each lift compartment 1, 2 a transfer device is present formed by two driver devices 18, 19 and a transfer conveyor 22, to which the dough holders 3 are transferred by the driver device 18, whereas the driver device 19 takes over the dough holders from the transfer conveyor and introduces them at the top into the second lift compartment 2.

Finally the inlet conveyor 16 connects to a supply conveyor 20 and the outlet conveyor connects to a discharge conveyor 21.

The driver devices 18, 19 are formed by circulating chains 23, 24 on which driving partitions 25 have been arranged. The driving partitions 25 have been placed at such a distance from each other that a dough holder 3 can be present in between adjacent driving partitions 25. The driving partitions 25 of the driver device 18 push and shift the dough holders from the first lift compartment 1 towards and onto the transfer conveyor 22 and the driving partitions 25 of the driver device 19 push and shift the dough holders from the transfer conveyor 22 into the second lift compartment 2.

Usually the wanted proving time of the dough products on the product holder 3 in the device for temporarily accommodating product holders is achieved when the product holders are introduced via the inlet opening 16a and are discharged via the outlet opening 17a, wherein the inlet and outlet opening are at the same level, for instance both at the lower side as shown in figure 1, and the product holders 3 go through the entire first 1 and second 2 lift compartment.

The first lift compartment 1 has a first inlet opening 16a at the lower side and the second lift compartment 2 has a first outlet opening 17a at the lower side. Moreover the first lift compartment 1 has a second outlet opening 22a at the upper side and the second lift compartment 2 has a second inlet opening 22b at the upper side. Thus the proving cabinet as shown in figure 1 has an inlet opening 16a, 22b both at the upper side and at the lower side for supplying product holders 3 into the device, and the device has an outlet opening 22a, 17a both at the upper side and at the lower side for discharging product holders 3 from the device. For at the upper side discharging or introducing product holders 3 via the outlet 22a or inlet 22b, use is made of the transfer conveyor 22 that is extended for extending through the outlet 22a and the inlet 22b and for that purpose is driven in opposite direction B, as shown in figure 1.

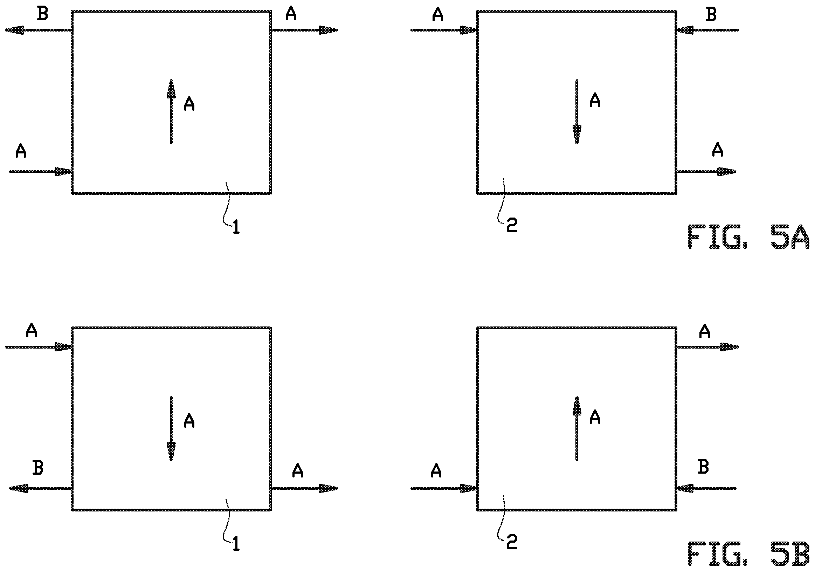

A use of said extra outlet opening 22a and inlet opening 22b will be discussed further below with reference to figure 5.

The freezer shown in figure 2 has the same structure as the U-shaped proving cabinet of figure 1. The same elements in the cabinet of figure 2 are referred to with the same reference numbers as in figure 1.

Usually the wanted freezing time of the dough products on the product holder 3 in the device for temporarily accommodating product holders is achieved when the product holders are introduced via the inlet opening 16a and are discharged via the outlet opening 17a, wherein the inlet and outlet opening are situated at the same level, for instance both at the lower side as shown in figure 2, and the product holders 3 go through the entire first 1 and second 2 lift compartment.

Here again the first lift compartment 1 has a first inlet opening 16a at the lower side and the second lift compartment 2 has a first outlet opening 17a at the lower side. Moreover the first lift compartment 1 has a second outlet opening 18a situated above the inlet opening 16a at the upper side and the second lift compartment 2 has a second inlet opening 19a situated above the outlet opening 17a at the upper side. Thus the freezer as shown in figure 2 has an inlet opening 16a, 19a both at the upper side and at the lower side for supplying product holders 3 into the device, and the device has an outlet opening 18a, 17a both at the upper side and at the lower side for discharging product holders 3 from the device. For at the upper side discharging or introducing product holders 3 via the outlet 18a or inlet 19a, use is made of the driver devices 18, 19. The driver device 18 at the top in the first lift compartment 1 is adapted for at choice shifting the product holders 3 towards and onto the transfer conveyor 22, or in case of an opposite drive direction B pushing and shifting the product holders 3 onto an outlet conveyor 18b. The driver device 19 at the top of the second lift compartment 2 is adapted for at choice pushing and shifting the product holders 3 from the transfer conveyor 22 into the second lift compartment 2, or in case of an opposite drive direction B pushing and shifting the product holders 3 from an inlet conveyor 19b into the second lift compartment 2.

A use of said extra outlet opening 18a and inlet opening 19a will be discussed further below with reference to figure 5.

In a third exemplary embodiment as shown in figure 3, the first lift compartment 1 and second lift compartment 2 are in each other's extension. This has the advantage that only one driver device 18 is necessary which extends over both the first lift compartment 1 and the second lift compartment 2, and that a transfer conveyor is not required.

Figure 3 shows a cooling device for product holders 3 that are used for baking dough products. After baking the dough products are removed out of the product holders or from the product holders. The empty product holders are returned to the start of the baking process to be used again. During returning them to the start, the product holders are cleansed and cooled to at least largely remove the heat absorbed during the baking process. Usually the desired cooling off of the product holders 3 in the device for temporarily accommodating product holders is achieved when the product holders are introduced via the inlet opening 16a and are discharged via the outlet opening 17a, wherein the inlet opening and outlet opening are at the same level, for instance both at the lower side as shown in figure 3, and the product holders 3 go through the entire first 1 and second 2 lift compartment. The outlet conveyor 21 returns the cooled down product holders 3 back to the start of the baking process in order to be provided with dough portions again.

Here again the first lift compartment 1 has a first inlet opening 16a at the lower side and the second lift compartment 2 has a first outlet opening 17a at the lower side. Moreover the first lift compartment 1 has a second outlet opening 18a situated above the inlet opening 16a at the upper side and the second lift compartment 2 has a second inlet opening 19a situated above the outlet opening 17a at the upper side. Thus the cooling device as shown in figure 3 has an inlet opening 16a, 19a both at the upper side and at the lower side for supplying product holders 3 into the device, and the device has an outlet opening 18a, 17a at both the upper side and at the lower side for discharging product holders 3 from the device. For at the upper side discharging or introducing product holders 3 via the outlet 18a or inlet 19a, use is made of the same driver device 18. The driver device 18 extends over both the first lift compartment 1 and the second lift compartment 2. In a first drive direction A of the driver device 18 the product holders 3 are transferred from the first lift compartment 1 to the second lift compartment 2. Because the driver device 18 can be driven in two, substantially opposing directions, in a second drive direction B of the driver device 18 the product holders 3 can be transferred on a second outlet conveyor 18b via the second outlet opening 18a. As in this situation no product holders 3 are transferred from the first lift compartment 1 to the second lift compartment 2, the second lift compartment 2 is available for introducing new product holders 3, that are ready on the second supply conveyor 19b, into the second lift compartment 2. Preferably this takes place simultaneously with the discharge of the product holders 3 from the first lift compartment 1. Both the discharge of product holders 3 from the first lift compartment 1 and the introduction of new product holders 3 into the second lift compartment 2 takes place by the same driver device 18, that is driven in the second drive direction B, that is oriented in opposing direction to the first drive direction A. Discharging used product carriers 3 via the second outlet opening 18a and introducing new product carriers 3 via the second inlet opening 19a takes place at the same speed as the transfer of product carriers 3 from the first lift compartment 1 to the second lift compartment 2, as a result of which substantially no standstill of the baking process is required when switching product carriers 3; switching product carriers 3 takes place during the regular course of the production line, except that the driver device 18 is driven in the second drive direction B instead of the first drive direction A.

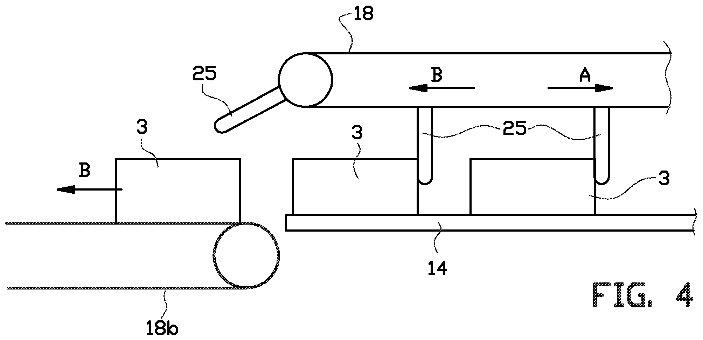

Figure 4 shows the discharge of product carriers 3 by pushing and shifting the product carriers 3 from the supporting elements 14 to the outlet conveyor belt 18b. For that purpose the driver device 18 is provided with driving partitions 25, that each push a product carrier 3 onwards in the direction of the outlet conveyor belt 18b. When the product carriers 3 are at least partially situated on the outlet conveyor belt 18b, they can be taken further along by said conveyor belt 18b, for instance to a storage device for product carriers 3.

At the opposite side of the driver device 18 the reverse process takes place. Here the new product carriers 3 are supplied to the second lift compartment 2 by the inlet conveyor 19. The inlet conveyor 19 at least partially supplies the product carriers 3 onto the supporting elements 15 of the second lift compartment 2. The driving partitions 25 run over a turning roller of the driver device 18 and end up behind a new product carrier 3 and, when abutting a side of the product carrier 3, push said product carrier 3 onto the supporting element 15 and shift the product carrier 3 up into its new position in the second lift compartment 2.

The process of examples shown in the figures 1-3 is schematically shown in figure 5A. In order to subject the product holders and/or the dough products placed thereon to a processing step during a wanted and set period of time, they are guided along route A through the device for temporarily accommodating product carriers. That means they are introduced at the bottom of the first lift compartment 1, intermittently moved upwards in the first lift compartment 1, at the top of the first lift compartment 1 transferred to the second lift compartment 2, moved intermittently downwards in the second lift compartment 2, and at the bottom of the second lift compartment 2 they are discharged. According to the invention the device for temporarily storing product carriers is provided with second inlet and outlet openings at the upper side of the first and second lift compartment 1, 2, for in between times discharging product holders and/or introducing new product holders via route B.

Figure 5B is a schematic view of the course of the dough holders through an alternative device which is not part of the invention. In order to subject the product holders and/or the dough products placed thereon to a processing step during a wanted and set period of time, they are guided along route A through said alternative device for temporarily accommodating product holders. That means they are introduced at the top of the first lift compartment 1, intermittently moved downwards in the first lift compartment 1, at the bottom of the first lift compartment 1 transferred to the second lift compartment 2, moved intermittently upwards in the second lift compartment 2, and at the top of the second lift compartment 2 they are discharged. According to the invention this alternative device for temporarily storing product carriers is provided with second inlet and outlet openings at the lower side of the first and second lift compartment 1, 2, for in between times discharging product holders and/or introducing new product holders via route B.

Figure 6 shows a part of an assembly for dough processing, in particular a production line for baking dough products, particularly loaves of bread, comprising a device for temporarily storing product carriers as shown in figure 3. The production line comprises a baking oven 100 having an inlet side 101 for at that location introducing product carriers 300, couples provided with baking pans, provided with dough portions, into the oven. The product carrier 300 is passed through the oven for baking the dough portions into loaves of bread. At an outlet side 102 situated opposite the inlet side 101 the product carriers 300 with the baked loaves of bread come out of the oven 100. Subsequently the product carrier 300 with loaves of bread are passed one by one past a depanner 400 via a transfer device 200 situated at right angles, at which depanner the baked loaves of bread are removed out of the product carrier 300. The now empty product carrier 301 is now returned to the start of the production line to be used again. For that purpose the empty product carriers 301 are conveyed onwards via a second transfer device 500 situated at right angles to a cleansing station 600. In said cleansing station 600 the empty product carriers 301 are cleansed and turned around. Subsequently the still hot product carriers 301 are supplied to a cooling device 700, that has already been described above with reference to figure 3. Said cooling device 700 comprises a first lift compartment 701 into which the hot product carriers 301 are introduced. Subsequently the product carriers are intermittently moved upwards and at the top of the first lift compartment 701 are transferred (see arrow A) to the second lift compartment 702. Subsequently the product carrier is intermittently moved downwards and discharged at the bottom of the second lift compartment 702. The now cooled down product carriers are subsequently conveyed back to the start of the production line where they can be filled again with dough portions that are baked in the oven 100.

The cooling device 700 is furthermore provided with an extra outlet opening 18a (see figure 3) for transferring used product carriers 301 to an outlet conveyor 718b, and with an extra inlet opening 19a (see figure 3) for introducing new product carriers 302 from an inlet conveyor 719b (see arrows B). The discharged used product carriers 301 are taken to a storage device 800. The storage device 800 comprises a platform placed above the oven 100, as a result of which the storage device 800 does not take up extra floor space. In that case the lifts in the first and second lift compartment serve to lift the product carriers onto the level of the storage device 800 and for lowering the product carriers from the level of the storage device 800 to the level of the oven. In that way no extra lifts are required to transport product carriers over the difference in height between the platform 800 above the oven 100 and the operational level of the oven 100.

On the platform 800 the product carriers 301 from the first lift compartment 701 are placed on a first storage conveyor 802. The platform 800 is provided with a portal hoist (not shown) for removing the product carriers from the first storage conveyor 802 and placing them in storage. At that moment the product carriers 301 have not completely cooled down yet, but this is of little importance to the storage of the product carriers; the product carriers will be able to cool down further in storage.

The product carriers 302 in storage can be placed on a second storage conveyor 804 by the same portal hoist, which conveyor discharges the product carriers 302 to the inlet conveyor 719b for supplying new product carriers into the second lift compartment 702. The product carriers have in fact already cooled down during storage. Generally the new product carriers 302 will not be cooled down further in the second lift compartment 702.

As shown in figure 6 a second comparable production line is placed next to the production line. Said second production line also comprises a depanner 401, a transfer device 501 situated at right angles, a cleansing device 601 and a cooling device 900. The cooling device 900 is furthermore provided with an extra outlet opening 18a (see figure 3) for transferring used product carriers 301 to an outlet conveyor 918b, and with an extra inlet opening 19a (see figure 3) for introducing new product carriers 301 from an inlet conveyor 919b (see arrows B). The discharged used product carriers 301 of said second production line are now taken to the same storage device 800. In this case the storage device 800 of said second production line is not placed above a device for dough processing that is a part of the same second production line for dough products, but the storage device 800 is placed above a device for dough processing that is part of an adjacent production line for dough products.

On the platform 800 the product carriers 301 from the first lift compartment 901 are placed onto a first storage conveyor 801. The platform 800 is provided with a portal hoist (not shown) for removing the product carriers from the first storage conveyor 801 and placing them in storage.

The product carriers 302 in storage can be placed on a second storage conveyor 803 by the same portal hoist, which conveyor discharges the product carriers 302 to the inlet conveyor 919b for supplying new product carriers into the second lift compartment 902.

The new product carriers 302 from storage can be the same as the used product carriers 301 for baking the same dough products, or be different from the used product carriers 301 for switching to baking other dough products.

## Claims

1. Device for temporarily accommodating product holders (3), particularly product holders for supporting dough products, which device is provided with at least two adjacently positioned lift compartments, wherein a first lift compartment (1) serves for intermittent upward conveyance of the product holders (3) and a second lift compartment (2) serves for intermittent downward conveyance of the product holders (3), and with a transfer device (18, 19, 22) for at the upper side of the lift compartments (1, 2) transferring the product holders (3) from the first to the second lift compartment, **characterized in that** the device has an inlet opening (16a, 19a, 22b) both at the upper side and at the lower side for supplying product holders into the device, and wherein the device has an outlet opening (17a, 18a, 22a) both at the upper side and at the lower side for discharging product
holders from the device, wherein the transfer device (18, 19, 22) is adapted for at the upper side introducing product holders (3) via the inlet opening
(22b) at the upper side and for at the upper side discharging product holders via the outlet opening (22a) at the upper side.

2. Device according to claim 1, wherein the first lift compartment has a first inlet opening (16a) at the lower side and the second lift compartment has a first outlet opening (17a) at the lower side, and wherein the first lift compartment has a second outlet opening (18a, 22a) at the upper side and the second lift compartment has a second inlet opening (19a, 22b) at the upper side.

3. Device according to any one of the claims 1-2 , wherein the transfer device (18, 19, 22) for transferring the product holders (3) from the first to the second lift compartment is driven in a first drive direction (A), and wherein the transfer device (18, 19, 22) for at the upper side_ introducing and discharging product holders is driven in a second drive direction (B) that is oriented opposite with respect to the first drive direction (A).

4. Device according to any one of the preceding claims, wherein each lift compartment is provided with pairs of elongated supporting elements (15) that are placed above one another, wherein the supporting elements (15) of each pair are situated opposite each other for supporting a product holder (3)
preferably wherein each lift compartment on both sides comprises a set of endless supporting chains (4, 5, 6) that move parallel to each other, to which supporting chains the supporting elements (15) are attached, wherein the supporting chains, at a side that faces the inside of the lift compartment, convey the supporting elements in the first lift compartment (1) intermittently upwards and the supporting elements in the second lift compartment (2) intermittently downwards, respectively.

5. Assembly for dough processing comprising a device for temporarily accommodating product holders (3) according to any one of the preceding claims.

6. Assembly according to claim 5 , comprising a first supply conveyor (20) for supplying product holders (3) to the inlet opening (16a) situated at the lower side of the device for temporarily accommodating product holders (3), a first discharge conveyor (21) for discharging product holders to the outlet opening (17a) situated at the lower side of the device for temporarily accommodating product holders (3), a second supply conveyor (19b, 22) for supplying product holders to the inlet opening (19a, 22b) situated at the upper side of the device for temporarily accommodating product holders, and a second discharge conveyor (18b, 22) for discharging product holders to the outlet opening (18a, 22a) situated at the upper side of the device for temporarily accommodating product holders.

7. Assembly according to claim 6 , wherein the second discharge conveyor (18b, 22) is adapted for conveying product holders from the device for temporarily accommodating product holders to a storage device (800) for product holders, and wherein the second supply conveyor (19b, 22) is adapted for conveying product holders from the storage device (800) to the device for temporarily accommodating product holders
preferably wherein the storage device comprises a platform, wherein the platform is placed above or on top of a device for dough processing (100).

8. Assembly according to claim 7, wherein the device for temporarily accommodating product holders and the device for dough processing both are part of a same production line for dough products,
preferably wherein the device for dough processing comprises an oven.

9. Assembly according to claim 8 , wherein the platform is provided with a portal robot.

10. Assembly according to claim 6, wherein the second discharge conveyor (18b, 22) is adapted for conveying product holders from the device for temporarily accommodating product holders to a further device for dough processing, and wherein the second supply conveyor (19b, 22) is adapted for conveying product holders from the further device for dough processing to the device for temporarily accommodating product holders.

11. Assembly according to claim 10 , wherein the second discharge conveyor (18b, 22) outside of the device for temporarily accommodating product holders, connects to or forms one unity with the second supply conveyor (19b, 22).

12. Assembly according to claim 10 or 11, wherein the further device for dough processing comprises a device for providing the dough products with a decoration.

13. Method for operating a device for temporarily accommodating product holders according to claim 3 , wherein the transfer device (18, 19, 22) is driven in a first direction (A) for transferring the product holders from the first to the second lift compartment, or in a second direction (B) for at the upper side introducing and/or discharging product holders, wherein the second direction is oriented opposite with respect to the first direction.

## Patentansprüche

1. Vorrichtung zur vorübergehenden Aufnahme von Produkthaltern (3), insbesondere Produkthaltern zum Tragen von Teigprodukten, wobei die Vorrichtung mindestens zwei nebeneinander angeordnete Hubabteile umfasst, wobei ein erstes Hubabteil (1) zur intermittierenden Aufwärtsbeförderung der Produkthalter (3) dient und ein zweites Hubabteil (2) zur intermittierenden Abwärtsbeförderung der Produkthalter (3) dient, sowie
eine Überführungseinrichtung (18, 19, 22) zum Überführen der Produkthalter (3) von dem ersten in das zweite Hubabteil an der Oberseite der Hubabteile (1, 2),
**dadurch gekennzeichnet, dass** die Vorrichtung sowohl an der Oberseite als auch an der Unterseite eine Einlassöffnung (16a, 19a, 22b) zum Zuführen von Produkthaltern in die Vorrichtung aufweist, und dass die Vorrichtung sowohl an der Oberseite als auch an der Unterseite eine Auslassöffnung (17a, 18a, 22a) zum Abführen von Produkthaltern aus der Vorrichtung aufweist,
wobei die Überführungseinrichtung (18, 19, 22) dazu eingerichtet ist, an der Oberseite Produkthalter (3) über die oberseitige Einlassöffnung (22b) zuzuführen und an der Oberseite Produkthalter über die oberseitige Auslassöffnung (22a) abzuführen.

2. Vorrichtung nach Anspruch 1, wobei das erste Hubabteil an der Unterseite eine erste Einlassöffnung (16a) aufweist und das zweite Hubabteil an der Unterseite eine erste Auslassöffnung (17a) aufweist, und wobei das erste Hubabteil an der Oberseite eine zweite Auslassöffnung (18a, 22a) aufweist und das zweite Hubabteil an der Oberseite eine zweite Einlassöffnung (19a, 22b) aufweist.

3. Vorrichtung nach einem der Ansprüche 1 bis 2, wobei die Überführungseinrichtung (18, 19, 22) zum Überführen der Produkthalter (3) aus dem ersten in das zweite Hubabteil in einer ersten Antriebsrichtung (A) angetrieben wird, und wobei die Überführungseinrichtung (18, 19, 22) zum Zuführen und Abführen von Produkthaltern an der Oberseite in einer zweiten Antriebsrichtung (B) angetrieben wird, die bezüglich der ersten Antriebsrichtung (A) entgegengesetzt ausgerichtet ist.

4. Vorrichtung nach einem der vorhergehenden Ansprüche, wobei jedes Hubabteil mit Paaren länglicher Tragelemente (15) ausgestattet ist, die übereinander angeordnet sind, wobei die Tragelemente (15) jedes Paares einander gegenüberliegend angeordnet sind, um einen Produkthalter (3) zu tragen, wobei vorzugsweise jedes Hubabteil an beiden Seiten einen Satz sich parallel zueinander bewegender endloser Stützketten (4, 5, 6) aufweist, wobei die Tragelemente (15) an den Stützketten befestigt sind, wobei die Stützketten an einer der Innenseite des Hubabteils zugewandten Seite die Tragelemente in dem ersten Hubabteil (1) intermittierend nach oben befördern und die Tragelemente in dem zweiten Hubabteil (2) intermittierend nach unten befördern.

5. Anordnung zur Teigverarbeitung, mit einer Vorrichtung zur vorübergehenden Aufnahme von Produkthaltern (3) gemäß einem der vorhergehenden Ansprüche.

6. Anordnung nach Anspruch 5, umfassend einen ersten Zuführförderer (20) zum Zuführen von Produkthaltern (3) zu der an der Unterseite der Vorrichtung zur vorübergehenden Aufnahme von Produkthaltern (3) befindlichen Einlassöffnung (16a), einen ersten Abführförderer (21) zum Abführen von Produkthaltern zu der an der Unterseite der Vorrichtung zur vorübergehenden Aufnahme von Produkthaltern (3) befindlichen Auslassöffnung (17a), einen zweiten Zuführförderer (19b, 22) zum Zuführen von Produkthaltern zu der an der Oberseite der Vorrichtung zur vorübergehenden Aufnahme von Produkthaltern befindlichen Einlassöffnung (19a, 22b) und einen zweiten Abführförderer (18b, 22) zum Abführen von Produkthaltern zu der an der Oberseite der Vorrichtung zur vorübergehenden Aufnahme von Produkthaltern befindlichen Auslassöffnung (18a, 22a).

7. Anordnung nach Anspruch 6, wobei der zweite Abführförderer (18b, 22) zum Befördern von Produkthaltern von der Vorrichtung zur vorübergehenden Aufnahme von Produkthaltern zu einer Speichervorrichtung (800) für Produkthalter eingerichtet ist und wobei der zweite Zufuhrförderer (19b, 22) zum Befördern von Produkthaltern von der Speichervorrichtung (800) zu der Vorrichtung zur vorübergehenden Aufnahme von Produkthaltern eingerichtet ist, wobei die Speichervorrichtung vorzugsweise eine Plattform umfasst, wobei die Plattform oberhalb oder auf einer Vorrichtung zur Teigverarbeitung (100) angeordnet ist.

8. Anordnung nach Anspruch 7, wobei die Vorrichtung zur vorübergehenden Aufnahme von Produkthaltern und die Vorrichtung zur Teigverarbeitung beide Teil ein und derselben Produktionslinie für Teigprodukte sind,
wobei die Vorrichtung zur Teigverarbeitung vorzugsweise einen Ofen umfasst.

9. Anordnung nach Anspruch 8, wobei die Plattform mit einem Portalroboter ausgestattet ist.

10. Anordnung nach Anspruch 6, wobei der zweite Abführförderer (18b, 22) dazu eingerichtet ist, Produkthalter von der Vorrichtung zur vorübergehenden Aufnahme von Produkthaltern zu einer weiteren Vorrichtung zur Teigverarbeitung zu befördern, und wobei der zweite Zufuhrförderer (19b, 22) dazu eingerichtet ist, Produkthaltern von der weiteren Vorrichtung zur Teigverarbeitung zu der Vorrichtung zur vorübergehenden Aufnahme von Produkthaltern zu befördern.

11. Anordnung nach Anspruch 10, wobei der zweite Abführförderer (18b, 22) außerhalb der Vorrichtung zur vorübergehenden Aufnahme von Produkthaltern mit dem zweiten Zufuhrförderer (19b, 22) verbunden ist oder eine Einheit mit diesem bildet.

12. Anordnung nach Anspruch 10 oder 11, wobei die weitere Vorrichtung zur Teigverarbeitung eine Vorrichtung zum Versehen der Teigprodukte mit einem Dekor umfasst.

13. Verfahren zum Betreiben einer Vorrichtung zur vorübergehenden Aufnahme von Produkthaltern nach Anspruch 3, wobei die Überführungseinrichtung (18, 19, 22) in einer ersten Richtung (A) angetrieben wird, um die Produkthalter aus dem ersten in das zweite Hubabteil zu überführen, oder in einer zweiten Richtung (B), um Produkthaltern an der Oberseite einzuführen und/oder abzuführen, wobei die zweite Richtung in Bezug auf die erste Richtung entgegengesetzt ausgerichtet ist.

## Revendications

1. Dispositif pour accueillir temporairement des supports de produit (3), en particulier des supports de produit pour supporter des produits à base de pâte, lequel dispositif est prévu avec au moins deux compartiments de levage positionnés de manière adjacente, dans lequel un premier compartiment de levage (1) sert de transport intermittent vers le haut des supports de produit (3) et un second compartiment de levage (2) sert de transport intermittent vers le bas des supports de produit (3), et avec un dispositif de transfert (18, 19, 22) pour, au niveau du côté supérieur des compartiments de levage (1, 2), transférer les supports de produit (3) du premier au second compartiment de levage, **caractérisé en ce que** le dispositif a une ouverture d'entrée (16a, 19a, 22b) à la fois au niveau du côté supérieur et au niveau du côté inférieur pour amener les supports de produit dans le dispositif, et dans lequel le dispositif a une ouverture de sortie (17a, 18a, 22a) à la fois au niveau du côté supérieur et au niveau du côté inférieur, pour décharger les supports de produit du dispositif,
dans lequel le dispositif de transfert (18, 19, 22) est adapté pour, au niveau du côté supérieur, introduire les supports de produit (3) via l'ouverture d'entrée (22b) au niveau du côté supérieur et pour, au niveau du côté supérieur, décharger les supports de produit via l'ouverture de sortie (22a) au niveau du côté supérieur.

2. Dispositif selon la revendication 1, dans lequel le premier compartiment de levage a une première ouverture d'entrée (16a) au niveau du côté inférieur et le second compartiment de levage a une première ouverture de sortie (17a) au niveau du côté inférieur, et dans lequel le premier compartiment de levage a une seconde ouverture de sortie (18a, 22a) au niveau du côté supérieur et le second compartiment de levage a une seconde ouverture d'entrée (19a, 22b) au niveau du côté supérieur.

3. Dispositif selon l'une quelconque des revendications 1 à 2, dans lequel le dispositif de transfert (18, 19, 22) pour transférer les supports de produit (3) du premier au second compartiment de levage, est entraîné dans une première direction d'entraînement (A), et dans lequel le dispositif de transfert (18, 19, 22) pour, au niveau du côté supérieur, introduire et décharger les supports de produit, est entraîné dans une seconde direction d'entraînement (B) qui est orientée à l'opposé par rapport à la première direction d'entraînement (A).

4. Dispositif selon l'une quelconque des revendications précédentes, dans lequel chaque compartiment de levage est prévu avec des paires d'éléments de support allongés (15) qui sont placés les uns au-dessus des autres, dans lequel les éléments de support (15) de chaque paire sont situés à l'opposé l'un de l'autre pour supporter un support de produit (3),
de préférence dans lequel chaque compartiment de levage des deux côtés, comprend un ensemble de chaînes de support sans fin (4, 5, 6) qui se déplacent parallèlement entre elles, auxquelles chaînes de support, sont fixés les éléments de support (15), dans lequel les chaînes de support, au niveau d'un côté qui fait face à l'intérieur du compartiment de levage, transportent les éléments de support dans le premier compartiment de levage (1) de manière intermittente vers le haut et les éléments de support dans le second compartiment de levage (2) de manière intermittente vers le bas, respectivement.

5. Ensemble pour traiter de la pâte comprenant un dispositif pour accueillir temporairement des supports de produit (3) selon l'une quelconque des revendications précédentes.

6. Ensemble selon la revendication 5, comprenant un premier transporteur d'alimentation (20) pour amener les supports de produit (3) à l'ouverture d'entrée (16a) située au niveau d'un côté inférieur du dispositif pour accueillir temporairement les supports de produit (3), un premier transporteur de décharge (21) pour décharger les supports de produit à l'ouverture de sortie (17a) située au niveau du côté inférieur du dispositif pour accueillir temporairement les supports de produit (3), un second transporteur d'alimentation (19b, 22) pour amener les supports de produit à l'ouverture d'entrée (19a, 22b) située au niveau du côté supérieur du dispositif pour accueillir temporairement des supports de produit et un second transporteur de décharge (18b, 22) pour décharger les supports de produit à l'ouverture de sortie (18a, 22a) située au niveau du côté supérieur du dispositif pour accueillir temporairement les supports de produit.

7. Ensemble selon la revendication 6, dans lequel le second transporteur de décharge (18b, 22) est adapté pour transporter des supports de produit du dispositif pour accueillir temporairement les supports de produit vers un dispositif de stockage (800) pour les supports de produit, et dans lequel le second transporteur d'alimentation (19b, 22) est adapté pour transporter des supports de produit du dispositif de stockage (800) au dispositif pour accueillir temporairement les supports de produit,
de préférence dans lequel le dispositif de stockage comprend une plateforme, dans lequel la plateforme est placée au-dessus ou sur le dessus d'un dispositif pour le traitement de la pâte (100).

8. Ensemble selon la revendication 7, dans lequel le dispositif pour accueillir temporairement les supports de produit et le dispositif pour le traitement de la pâte font tout deux partie d'une même ligne de production pour produits à base de pâte,
de préférence dans lequel le dispositif pour le traitement de la pâte comprend un four.

9. Ensemble selon la revendication 8, dans lequel la plateforme est dotée d'un portique robotisé.

10. Ensemble selon la revendication 6, dans lequel le second transporteur de décharge (18b, 22) est adapté pour transporter des supports de produit du dispositif pour accueillir temporairement des supports de produit jusqu'à un autre dispositif pour le traitement de la pâte et dans lequel le second transporteur d'alimentation (19b, 22) est adapté pour transporter des supports de produit de l'autre dispositif pour le traitement de la pâte jusqu'au dispositif pour accueillir temporairement les supports de produit.

11. Ensemble selon la revendication 10, dans lequel le second transporteur de décharge (18b, 22) à l'extérieur du dispositif pour accueillir temporairement les supports de produit, se raccorde à ou forme une unité avec le second transporteur d'alimentation (19b, 22).

12. Ensemble selon la revendication 10 ou 11, dans lequel l'autre dispositif pour le traitement de la pâte comprend un dispositif pour doter les produits à base de pâte d'une décoration.

13. Procédé pour faire fonctionner un dispositif pour accueillir temporairement des supports de produit selon la revendication 3, dans lequel le dispositif de transfert (18, 19, 22) est entraîné dans une première direction (A) pour transférer les supports de produit du premier au second compartiment de levage, ou dans une seconde direction (B) pour, au niveau du côté supérieur, introduire et/ou décharger les supports de produit, dans lequel la seconde direction est orientée à l'opposé par rapport à la première direction.
